Europäisches Patentamt

European Patent Office

Office européen des brevets

(19)

(11) Numéro de publication: **0 334 688**
**B1**

(12) FASCICULE DE BREVET EUROPEEN

(45) Date de publication du fascicule du brevet:
**27.12.90**

(21) Numéro de dépôt: **89400384.7**

(22) Date de dépôt: **10.02.89**

(51) Int. Cl.⁵: **F16B 37/04**

---

(54) Dispositif de fixation perfectionnée formant pince et pièce quelconque munie de ce dispositif.

---

(30) Priorité: **24.02.88 FR 8802241**

(43) Date de publication de la demande:
**27.09.89 Bulletin 89/39**

(45) Mention de la délivrance du brevet:
**27.12.90 Bulletin 90/52**

(84) Etats contractants désignés:
**AT BE CH DE ES GB GR IT LI LU NL SE**

(56) Documents cités:
**EP-A- 0 199 614**
**EP-A- 0 224 746**
**FR-A- 2 489 903**
**FR-E- 93 127**

(73) Titulaire: **RAPID S.A., 251 Boulevard Péreire,**
**F-75852 Paris Cédex 17(FR)**

(72) Inventeur: **Dubost, Dominique, 53 Résidence Elysées II,**
**F-78170 La Celle Sainte Cloud(FR)**

(74) Mandataire: **Durand, Yves Armand Louis et al, CABINET**
**WEINSTEIN 20, Avenue de Friedland, F-75008 Paris(FR)**

---

ACTORUM AG

## Description

La présente invention concerne un dispositif de fixation perfectionnée formant pince qui peut être utilisé pour maintenir groupés des objets quelconques, tels que par exemple des documents, ou qui peut encore constituer un écrou permettant de fixer par exemple un panneau sur un autre panneau.

Elle vise encore une pièce remplissant une ou plusieurs fonctions et à laquelle est incorporé le dispositif ci-dessus.

Il a déjà été proposé, si l'on se reporte notamment à la demande de brevet européen EP-A 0 199 614 et appartenant à la demanderesse, un dispositif de fixation formant pince qui présente sensiblement la forme d'un U élastiquement déformable et insérable par ses branches sur le bord d'un objet ou d'un groupe d'objets, ce dispositif comprenant un élément interposé entre les deux branches du U pour permettre d'une part le maintien de ces branches en position écartée avant insertion sur le bord de l'objet, et d'autre part leur fermeture après insertion sur le bord de l'objet par le fait que ledit élément échappe à l'une des branches du U.

Toutefois, le dispositif ci-dessus, bien que donnant toute satisfaction, présentait une structure relativement complexe et coûteuse et cela tant en ce qui concerne les branches du U de la pince que l'élément interposé de façon coulissante entre ces branches et qui était monté de façon détachée de ces branches, et pouvait par conséquent être perdable.

Aussi, la présente invention a pour objet un dispositif de fixation en forme de pince qui remédie notamment aux inconvénients ci-dessus en ce sens qu'il constitue un ensemble monobloc de structure beaucoup plus simple et donc moins coûteuse que celle du dispositif cité plus haut.

A cet effet, l'invention a pour objet un dispositif de fixation perfectionnée formant pince et du type présentant sensiblement la forme d'un U élastiquement déformable et insérable par ses branches sur le bord d'un objet, et comprenant un élément interposé entre les deux branches pour permettre d'une part le maintien de ces branches en position écartée avant insertion sur le bord de l'objet et d'autre part leur fermeture après insertion sur le bord de l'objet par le fait que ledit élément échappe à l'une des branches du U, caractérisé en ce que cet élément vient de matière avec l'une des branches du U et est constitué par une languette ou analogue élastique prenant racine sur cette branche et dont l'extrémité libre peut soit coopérer avec soit échapper à un bord de l'autre branche.

Suivant une autre caractéristique de ce dispositif, la languette précitée présente une forme arquée ou cambrée à concavité tournée du côté de la partie ouverte du U.

L'extrémité libre de cette languette arquée coopère avec le bord d'une ouverture ménagée dans la branche du U opposée à celle où prend racine ladite languette.

Suivant un mode de réalisation préféré, la languette précitée résulte d'un découpage pratiqué en partie dans la portion en forme d'anse reliant les deux branches du U et en partie dans la branche du U où prend racine cette languette.

Le dispositif selon cette invention est encore caractérisé par une nervure ou analogue prévue entre le découpage et l'ouverture précitée.

Cette nervure confère avantageusement une rigidité au niveau du raccordement de l'une des branches avec la base du U de sorte que la zone de raccordement de l'autre branche du U avec la base de ce U pourra seule pivoter lors de l'écartement ou du rapprochement des branches.

Le dispositif selon cette invention peut être utilisé pour le groupage d'objets quelconques ou peut encore être utilisé comme écrou insérable sur le bord d'un panneau.

A cet effet, la branche du U, comportant l'ouverture précitée comportera également une empreinte ou un fût taraudé ou même un écrou susceptible de coopérer avec le filetage d'un élément fileté, tandis que l'autre branche du U où prend racine la languette comporte un orifice de passage de cet élément fileté.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en perspective d'un dispositif formant écrou conforme aux principes de l'invention ;

La figure 2 est une vue de côté en élévation de ce dispositif illustré en position armée et ouverte ;

La figure 3 est une vue similaire à la figure 2 mais montrant le dispositif en position déclenchée et fermée ;

La figure 4 est une vue en bout du dispositif suivant la flèche IV de la figure 2 ;

Les figures 5 et 6 sont des vues en élévation et de côté du dispositif selon l'invention et montrant comment s'effectue l'insertion de ce dispositif sur un panneau (figure 5) et comment s'effectue le pinçage du dispositif sur ce panneau (figure 6) ;

La figure 7 est une vue en élévation et de côté montrant les positions ouvertes et fermées du dispositif et donc la manière dont il se déforme ; et

La figure 8 est une vue en perspective d'un dispositif conforme à l'invention qui ne constitue pas un écrou mais une simple pince pour grouper des objets divers.

En se reportant aux figures on voit un dispositif de fixation formant pince qui comprend essentiellement une pièce en forme de U 1 élastiquement déformable comportant deux branches élastiques 2 et 3 raccordées par une partie 4 présentant en quelque sorte la forme d'une anse et constituant la base du U.

L'une 2 des branches du U peut comporter une empreinte 5 constituant en quelque sorte un taraudage susceptible de coopérer avec le filetage d'un élément fileté (non représenté), tandis que l'autre branche 3 comporte un orifice 6 permettant le passage de cet élément fileté, ce dernier pouvant traverser l'orifice O d'un panneau P lorsque le dispositif est en position insérée et montée sur le bord du panneau P, comme on le voit sur les figures 5 et 6.

Les branches 2 et 3, comme on le voit sur la figure 8, peuvent parfaitement ne pas comporter respectivement d'empreinte 5 et d'orifice 6, de sorte que le dispositif constitue une simple pince susceptible de grouper plusieurs objets accolés F.

Toutes les dispositions ci-dessus sont connues et ne nécessitent pas d'explications complémentaires.

Conformément à l'invention, l'élément interposé entre les branches 2 et 3 du U 1 pour permettre d'une part leur maintien en position écartée avant insertion sur le bord d'un objet et d'autre part leur fermeture après insertion sur le bord de cet objet, est constitué par une languette élastique 7 qui vient de matière avec le U 1 et prend racine sur l'une 3 des branches du U, comme on l'a repéré en 8 sur les figures.

Cette languette présente de préférence une forme arquée ou cambrée à concavité tournée du côté de la partie ouverte 9 du U.

L'extrémité libre 10 de la languette 7 coopère avec le bord 11 d'une ouverture 12 ménagée dans la branche 2 du U opposée à celle 3 où prend racine ladite languette.

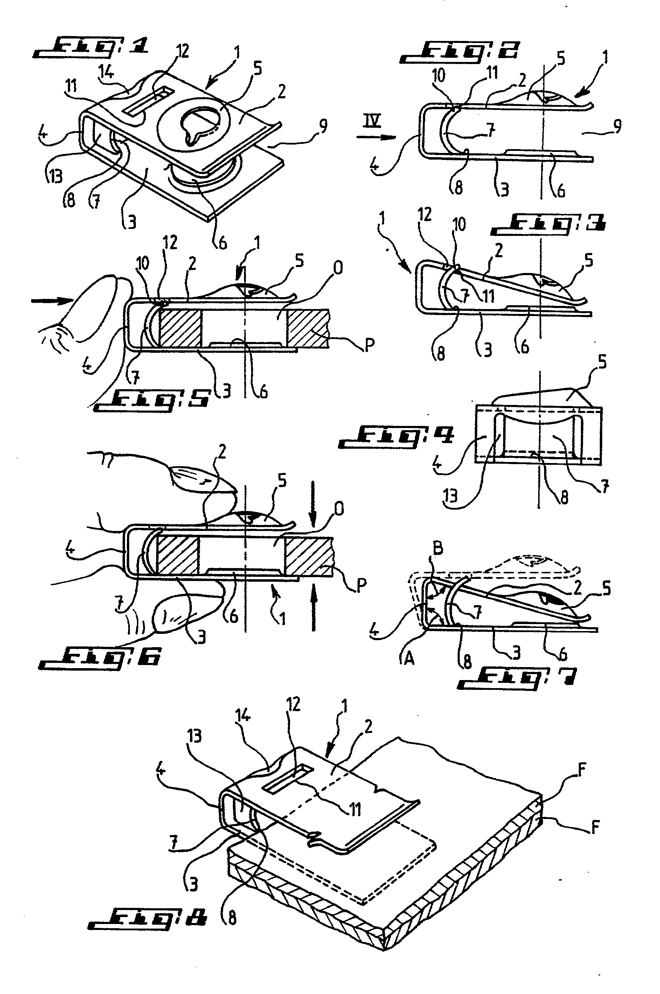

Suivant l'exemple de réalisation représenté, la languette 7 est réalisée par un découpage 13 pratiqué en partie dans la base 4 du U 1 et en partie dans la branche 3 du U où prend racine la languette 7, comme on le voit bien sur les figures 1, 4 et 8.

On a montré en 14 sur les figures 1 et 8 une nervure de raidissage située dans la zone du raccordement de la branche 2 à la base 4 du U entre le découpage 13 et l'ouverture 12.

On comprend donc de ce qui précède que le dispositif formant pince selon cette invention constitue une pièce monobloc d'une structure mécanique et d'un fonctionnement particulièrement simples et fiables comme on va le démontrer dans le fonctionnement qui suit.

Pour armer la pince, c'est-à-dire pour maintenir en position écartée les deux branches 2 et 3, il suffit d'écarter les branches 2 et 3 du U par sa partie ouverte 9, de sorte que l'extrémité libre 10 de la languette 7 viendra s'accrocher sur le bord 11 de l'ouverture 12, comme on le voit bien sur les figures 2 et 5.

Ensuite, la pince est insérée sur le bord d'un panneau P ou d'objets F à regrouper, comme cela est visible sur les figures 5 et 8.

En position insérée, on peut procéder de deux façons différentes pour fermer la pince, c'est-à-dire pour dégager l'extrémité libre 10 de la languette 7 du bord 11 de l'ouverture 12. On peut exercer une pression sur la base 4 du U 1 de sorte que la languette 7 se déforme par appui sur le bord du panneau P ou des objets F, et échappe ainsi au bord 11 de l'ouverture 12. On peut encore, comme on le voit sur la figure 6, exercer une pression sur les branches 2 et 3 du U 1, ce qui provoquera également le dégagement de l'extrémité libre 10 de la languette cambrée 7 du bord 11 de l'ouverture 12.

On comprend donc de ce qui précède que le passage de la position ouverte à la position fermée de la pince est réversible, la position fermée s'obtenant comme il a été décrit ci-dessus et le retour à la position ouverte étant obtenu par l'ouverture des extrémités des branches du U de la pince.

Par ailleurs, on remarquera ici que le maintien de la position ouverte de la pince est obtenu par une déformation élastique contrôlée de ladite pince. Si l'on se reporte à la figure 7, on voit que cette déformation est asymétrique de façon à provoquer une ouverture de l'angle A (zone de raccordement de la branche 3 à la base 4 du U), tandis que l'angle B (zone de raccordement de la branche 2 à la base 4 du U) demeure sensiblement constant, et cela grâce à la nervure de raidissement 14, ce qui, comme on le voit bien en traits pointillés sur la figure 7, permet à la partie de la pince formant l'angle B d'effectuer une rotation autour de la partie de la pince formant l'angle A, de façon à obtenir l'écartement des branches 2 et 3 jusqu'à ce que l'extrémité libre 10 de la languette 7 vienne en prise avec le bord 11 de l'ouverture 12 dans la branche 2.

On a donc réalisé suivant l'invention un dispositif de fixation formant pince qui est monobloc, d'une conception particulièrement simple, fiable et peu coûteuse, et qui peut trouver de multiples applications.

Bien entendu, l'invention n'est nullement limitée aux modes de réalisation décrits et illustrés qui n'ont été donné qu'à titre d'exemple.

C'est ainsi que la languette 7 prenant racine dans la branche 3 pourrait être droite et non incurvée, pourrait être formée autrement que par découpage dans la matière de la pince, ou pourrait prendre racine à un endroit autre que celui représenté, sans pour cela sortir du cadre de l'invention.

C'est ainsi que la languette 7 pourrait prendre naissance sur le ou les côtés de la branche 3, et son extrémité libre pourrait coopérer avec les bords de la branche 2.

Par ailleurs, qu'il s'agisse d'une pince formant écrou ou non, cette pince peut, sans sortir du cadre de l'invention, être solidaire de ou incorporée à une pièce remplissant d'autres fonctions.

**Revendications**

1. Dispositif de fixation perfectionnée formant pince et du type présentant sensiblement la forme d'un U (1) élastiquement déformable et insérable par ses branches (2, 3) sur le bord d'un objet, et comprenant un élément interposé entre les deux branches pour permettre d'une part le maintien de ces branches en position écartée avant insertion sur la bord de l'objet et d'autre part leur fermeture après insertion sur le bord de l'objet par le fait que ledit élément échappe à l'une des branches du U, caractérisé en ce que cet élément vient de matière avec l'une (3) des branches du U et est constitué par une languette ou analogue élastique (7) prenant racine sur cette branche et dont l'extrémité libre (10) peut soit coopérer avec soit échapper à un bord (11) de l'autre branche (2).

2. Dispositif selon la revendication 1, caractérisé en ce que la languette précitée (7) présente une forme arquée ou cambrée à concavité tournée du côté de la partie ouverte (9) du U (1).

3. Dispositif selon la revendication 1 ou 2, caractérisé en ce que l'extrémité libre (10) de la languette arquée (7) coopère avec le bord (11) d'une ouverture (12) ménagée dans la branche (2) du U opposée à celle (3) où prend racine ladite languette.

4. Dispositif selon l'une des revendications 1 à 3, caractérisé en ce que la languette précitée (7) résulte d'un découpage (13) pratiqué en partie dans la portion en forme d'anse (4) reliant les deux branches (2, 3) du U (1) et en partie dans la branche (3) du U où prend racine cette languette.

5. Dispositif selon l'une des revendications 1 à 4, caractérisé par une nervure ou analogue (14) prévue entre le découpage (13) et l'ouverture précitée (12).

6. Dispositif selon l'une des revendications 1 à 5, caractérisé en ce que la branche (2) du U comportant l'ouverture (12) comporte également une empreinte (5) ou un fût taraudé ou même un écrou susceptible de coopérer avec le filetage d'un élément fileté, tandis que l'autre branche (3) du U où prend racine la languette (7) comporte un orifice (6) de passage de cet élément fileté.

7. Pièce munie d'un dispositif selon l'une des revendications 1 à 6.

## Patentansprüche

1. Verbesserte zangenartige Befestigungsvorrichtung derjenigen Gattung, die etwa die Gestalt eines elastisch verformbaren und mit seinen Schenkeln (2, 3) am Rande eines Gegenstandes einfügbaren U's (1) aufweist und ein zwischen den beiden Schenkeln dazwischen gefügtes Element umfaßt, um einerseits die Beibehaltung dieser Schenkel in gespreizter Lage vor Einfügung an dem Rand des Gegenstandes und andererseits deren Schließen nach Einfügung an dem Rand des Gegenstandes dadurch zu gestatten, daß das besagte Element aus einem der Schenkel des U's entweicht, dadurch gekennzeichnet, daß dieses Element einstückig mit einem (3) der Schenkel des U's und durch eine an diesem Schenkel angewurzelte elastische Zunge oder dergleichen (7) gebildet wird, deren freies Ende (10) entweder mit einem Rand (11) des anderen Schenkels (2) zusammenwirken oder aus diesem entweichen kann.

2. Vorrichtung nach Anspruch 1, dadurch gekennzeichnet, daß die vorgenannte Zunge (7) eine bogenförmige bzw. gekrümmte Gestalt aufweist, deren Konkavität dem offenen Bereich (9) des U's (1) zugewandt ist.

3. Vorrichtung nach Anspruch 1 oder 2, dadurch gekennzeichnet, daß das freie Ende (10) der bogenförmigen Zunge (7) mit dem Rand (11) einer Öffnung (12) die in demjenigen Schenkel (2) des U's, der dem Schenkel (3), an welchem die besagte Zunge angewurzelt ist, gegenüberliegt, angeordnet ist, zusammenwirkt.

4. Vorrichtung nach einem der Ansprüche 1 bis 3, dadurch gekennzeichnet, daß die vorgenannte Zunge (7) aus einem Ausschnitt (13) entsteht, der teilweise in dem, die beiden Schenkel (2, 3) des U's (1) verbindenden korbbogenförmigen Teil (4) und teilweise in demjenigen Schenkel (3) des U's, wo diese Zunge eingewurzelt ist, angeordnet ist.

5. Vorrichtung nach einem der Ansprüche 1 bis 4, gekennzeichnet durch eine zwischen dem Ausschnitt (13) und der vorgenannten Öffnung (12) vorgesehenen Rippe oder dergleichen (14).

6. Vorrichtung nach einem der Ansprüche 1 bis 5, dadurch gekennzeichnet, daß der, die Öffnung (12) aufweisende, Schenkel (2) des U's auch eine Prägung (5) oder einen Schaft mit Innengewinde oder sogar eine Mutter, die mit dem Gewinde eines gewindeten Elements zusammenwirken kann, aufweist, während der andere Schenkel (3) des U's, wo die Zunge (7) angewurzelt ist, eine Öffnung (6) zum Hindurchführen dieses gewindeten Elements aufweist.

7. Mit einer Vorrichtung nach einem der Ansprüche 1 bis 6 versehenes Werkstück.

## Claims

1. Improved fastening device forming a clip and of the type exhibiting substantially the shape of a U (1) elastically deformable and insertable with its legs (2, 3) onto the edge of an object and comprising an element interposed between both legs to permit on the one hand the holding of these legs in a spaced apart position before insertion onto the edge of the object and on the other hand their closing after insertion onto the edge of the object by the fact that the said element escapes from one of the legs of the U, characterized in that this element is made integral in one piece with one (3) of the legs of the U and is constituted by an elastic tongue or the like originating from this leg and the free end (10) of which may either co-operate with or escape from one edge (11) of the other leg (2).

2. Device according to claim 1, characterized in that the aforesaid tongue (7) exhibits an arcuate or cambered shape with a concavity turned towards the open portion (9) of the U (1).

3. Device according to claim 1 or 2, characterized in that the free end (10) of the arcuate tongue (7) cooperates with the edge (11) of an opening (12) formed in the leg (2) of the U opposite to that (3) from which the said tongue originates.

4. Device according to one of claims 1 to 3, characterized in that the aforesaid tongue (7) results from a cut (13) made in part in the handle-shaped portion (4) connecting both legs (2, 3) of the U (1) and in part in the leg (3) of the U from which this tongue originates.

5. Device according to one of claims 1 to 4, characterized by a rib or the like (14) provided between the cut (13) and the aforesaid opening (12).

6. Device according to one of claims 1 to 5, characterised in that the leg (2) of the U comprising the opening (12) also comprises an impression (5) or a tapped shank or even a nut susceptible of co-operating with the thread of a threaded element, whereas the other leg (3) of the U from which the tongue (7) originates comprises an aperture (6) for the passage of this threaded element.

7. Part provided with a device according to one of claims 1 to 6.

EP 0 334 688 B1